# EUROPEAN PATENT SPECIFICATION

(11) **EP 3 540 814 B1**
(45) Date of publication and mention of the grant of the patent: **29.04.2020**
(21) Application number: 18187077.5
(22) Date of filing: 02.08.2018
(51) Int. Cl.: H01M 2/10, H01M 2/20, H01M 2/12

(54) **END PLATE, HOUSING, AND BATTERY MODULE**
ENDPLATTE, GEHÄUSE UND BATTERIEMODUL
PLAQUE D'EXTRÉMITÉ, BOÎTIER ET MODULE DE BATTERIE

(30) Priority: 16.03.2018 CN 201820365930 U
(43) Date of publication of application: 18.09.2019
(73) Proprietor: Contemporary Amperex Technology Co., Limited, Jiaocheng District Ningde City, Fujian 352100 (CN)
(72) Inventor: QIN, Feng, Ningde City, Fujian 352100 (CN); WANG, Zhi, Ningde City, Fujian 352100 (CN); MA, Lin, Ningde City, Fujian 352100 (CN); WANG, Xiaofan, Ningde City, Fujian 352100 (CN); YOU, Zhiyi, Ningde City, Fujian 352100 (CN); ZHANG, Hua, Ningde City, Fujian 352100 (CN)
(74) Representative: Boult Wade Tennant LLP

(56) References cited:
- EP-A1- 3 525 255
- EP-A2- 2 450 978
- CN-U- 207 800 740
- DE-A1-102012 219 784
- US-A1- 2017 054 116

## Description

### TECHINICAL FIELD

The present application relates to the field of battery module devices, and more particularly to an end plate, a housing, and a battery module.

### BACKGROUND

With the wide application of lithium-ion power batteries in new energy vehicles, people have made increasingly higher demands on the performance of lithium-ion power battery pack. Such that, the performance of the lithium-ion power battery pack should be improved. The battery module of the lithium-ion power battery pack in the prior art mainly includes end plates, side plates, and battery units, wherein after a plurality of battery units are grouped, the end plates and the side plates are adhesively welded around the grouped battery cells to form a housing. The function of the end plate in the prior art is simple, and the end plate is only used for sealing the grouped battery cells, which makes the structure of the battery module more complicated.

Therefore, there is a need for a new end plate, housing, and battery module.

EP-A-2,450,978 discloses those features set out in the precharacterising part of claim 1.

### SUMMARY

The embodiments of the present disclosure provide an end plate, a housing, and a battery module, which is intended to enrich the function of the end plate and simplify the structure of the battery module. In particular, the present invention provides an end plate in accordance with claim 1.

An embodiment of the present disclosure provides an end plate for a housing of a battery module, including: a plate-shaped body portion that has a first surface and a second surface disposed opposite to each other, wherein output electrode holes are disposed on the body portion to enable output electrodes of the battery module to extend out from the output electrode holes; two connection pillars are provided; a connecting pillar disposed on the first surface and extending in a first direction (Z), wherein the connecting pillar includes a connecting though-hole passing through the connecting pillar along the first direction (Z); and a vent hole disposed on the body portion for mounting a vent plate of the battery module. According to one aspect of the present disclosure, the number of the output electrode holes is two, the two output electrode holes are distributed at intervals on the body portion along a second direction (Y), wherein the second direction (Y) and the first direction (Z) are perpendicular to each other, and the vent hole is disposed between the two output electrode holes.

According to one aspect of the present disclosure, the end plate further includes at least two mounting holes disposed on the body portion for mounting a deformable plate of the battery module, wherein the at least two mounting holes are distributed at intervals along the second direction (Y), and the at least two mounting holes and the two output electrode holes are disposed side by side at intervals along the first direction (Z).

According to one aspect of the present disclosure, the end plate further includes a plurality of positioning concave portions, wherein the positioning concave portion are formed by the second surface being concaved toward the first surface, and the mounting holes and the vent hole are disposed on the positioning concave portion.

According to the present disclosure, the end plate further includes a convex portion formed by the body portion protruding in a direction from the second surface to the first surface, the output electrode holes and the vent hole are disposed on the convex portion.

Another embodiment of the present disclosure provides a housing for a battery module, including: a barrel-shaped housing body extending in a third direction (X), wherein the housing body has a containing chamber and two openings connected with the containing chamber and disposed opposite to each other along the third direction (X); the end plate described above, wherein each of the openings is provided with the end plate, and the second surface of the end plate is disposed close to the housing body; wherein the third direction (X) and the first direction (Z) are perpendicular to each other. A further embodiment of the present disclosure provides a battery module, including: the housing described above; a plurality of batteries disposed side by side in the containing chamber along the second direction (Y).

According to one aspect of the present disclosure, the battery includes output terminals disposed on at least one end of the two ends of the battery along the third direction (X).

According to one aspect of the present disclosure, the battery module further includes an output component comprising a connecting component and an output pole, wherein the connecting component is provided with a connecting hole, and the output pole has a connecting portion and a stop portion along its extending direction, wherein the diameter of the connecting portion matches with the aperture of the output electrode hole and the connecting hole such that the connecting portion is able to pass through the output electrode hole and nest in the connecting hole, and the diameter of the stop portion is greater than or equal to the diameter of the connecting portion such that the connecting component is able to be fixed to the end plate through the output pole.

In the embodiment of the present disclosure, the output electrode holes may be disposed on the end plate, which enables the output electrodes of the battery module to extend out from the output electrode holes. The connecting pillars may be disposed on the first surface of the end plate, which enables a plurality of battery modules to connect to each other through the connecting pillars. Since the connecting pillars may be disposed on the surface of the end plate, the body portion of the end plate may be thinner, such that the weight of the battery module may be reduced, and the energy density of the battery module may be increased. The vent hole may be disposed on the body portion so as to mount the vent plate of the battery module. The end plate of the embodiment of the present disclosure has diversified functions, lighter weight, and simple structure.

### BRIEF DESCRIPTION OF THE DRAWINGS

Other features, purposes, and advantages of the present disclosure will become apparent from the following detailed description of non-limiting embodiments with reference to the drawings in which like or similar reference numerals indicate like or similar features.
Fig. 1 is a stereoscopic structure diagram of an end plate according to an embodiment of the present disclosure;
Fig. 2 is a stereoscopic structure diagram viewed for another direction of an end plate according to an embodiment of the present disclosure;
Fig. 3 is a front view of an end plate according to an embodiment of the present disclosure;
Fig. 4 is a sectional view at A-A in Fig. 3.
Fig. 5 is a top view of an end plate according to an embodiment of the present disclosure;
Fig. 6 is a structure diagram of a housing according to an embodiment of the present disclosure;
Fig. 7 is an structure diagram of a battery module according to an embodiment of the present disclosure;
Fig. 8 is a structure diagram of an output component of a battery module according to an embodiment of the present disclosure;

Illustration for reference numerals:
100: the end plate;
110: the body portion; 111: the first surface; 112: the second surface; 113: the output electrode hole; 114: the vent hole; 115: the mounting hole;
120: the connecting pillar; 121: the connecting though-hole;
130: the positioning concave portion;
140: the convex portion;
200: the housing;
210: the housing body; 211: the containing chamber; 212: the opening;
300: the battery;
310: the output terminal;
400: the insulating separator;
500: the output component;
510: the connecting component; 511: the connecting hole;
520: the output pole; 521: the connecting portion; 522: the stop portion;

### DETAILED DESCRIPTION

The features and exemplary embodiments of various aspects of the present disclosure will be described in detail below. In the following detailed description, numerous specific details are set forth in order to provide a thorough understanding of the present disclosure. However, it will be apparent to those skilled in the art that the present disclosure may be practiced without some of these specific details. The following description of the embodiments is merely intended to provide a better understanding of the present disclosure by illustrating examples of the present disclosure. In the drawings and the following description, at least some of the well-known structures and techniques are not shown in order to avoid unnecessarily obscuring the present disclosure; and, for clarity, the dimensions of the partial structures may be exaggerated. Additionally, the features, structures, or characteristics described hereinafter may be combined in any suitable manner in one or more embodiments.

The direction appearing in the following description are all directions shown in the drawings, and do not limit the specific structure of the embodiments of the present disclosure. In the description of the present disclosure, it should be further noted that, unless otherwise specified and limited, the terms "mount" and "connect" should be understood in a broad sense, for example, it may be a fixed connection, a detachable connection, or an integrated connection, either directly or indirectly. Those of ordinary skill in the art can understand the specific meanings of the above terms in the present disclosure according to the specific situation.

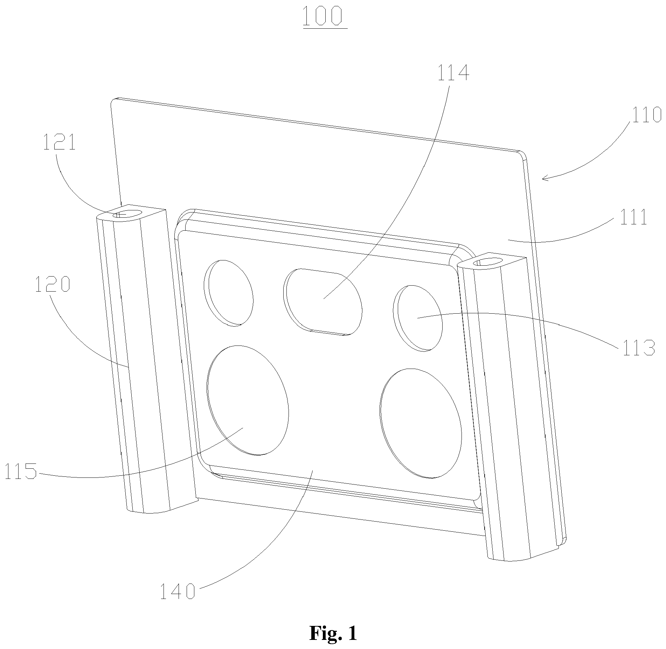

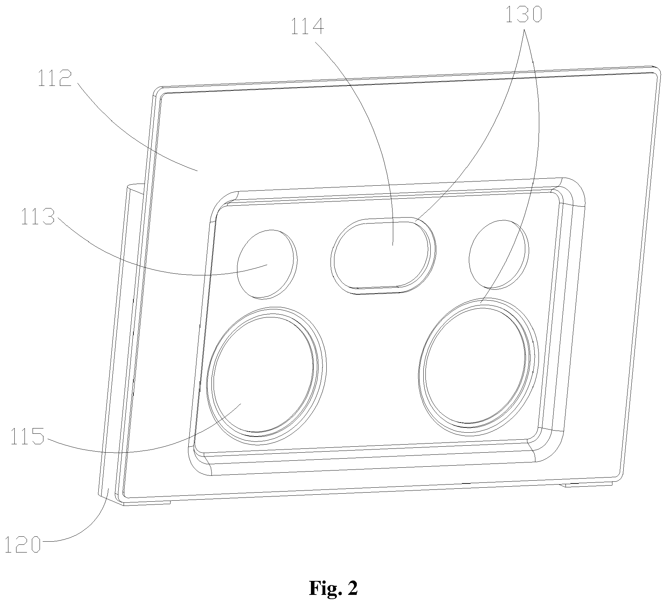

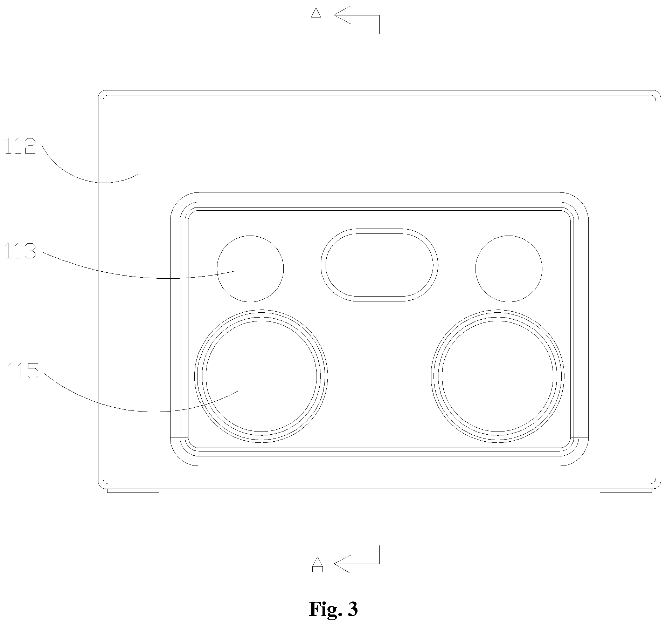

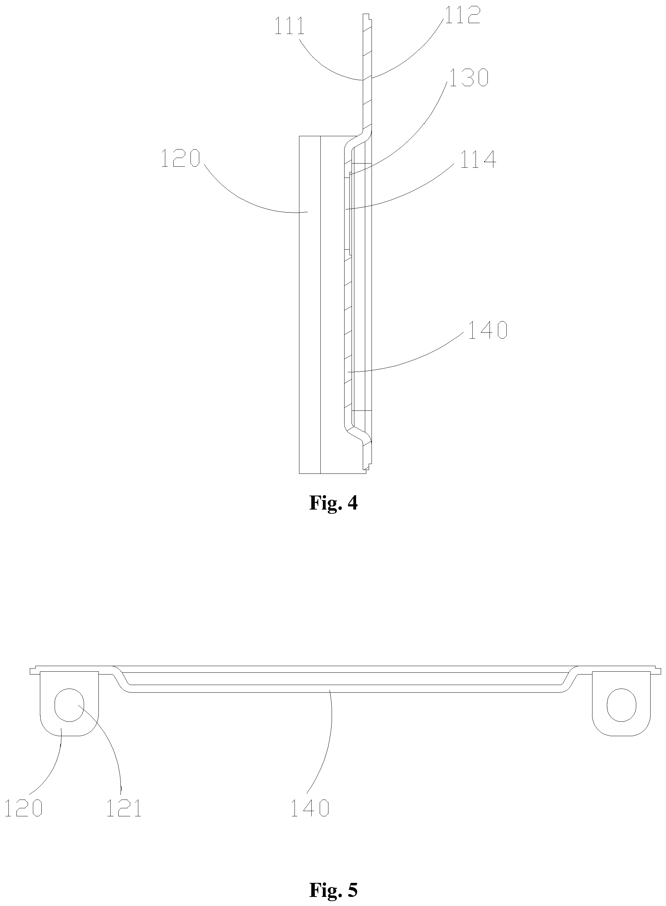

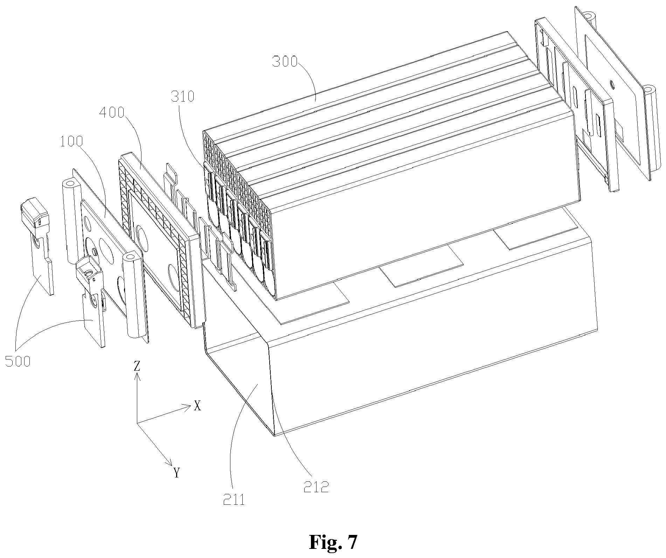

For better understanding of the present disclosure, the end plate, the housing, and the battery module according to embodiments of the present disclosure will be described in detail with reference to Fig. 1 to Fig. 8, in which the first direction (Z), the second direction (Y) and the third direction (X) described herein are as shown in Fig. 7.

Fig. 1 to Fig. 5 illustrate a structure diagram of an end plate 100. The end plate 100 may include: a plate-shaped body portion 110 that has a first surface 111 and a second surface 112 disposed opposite to each other, wherein output electrode holes 113 are disposed on the body portion to enable output electrodes of the battery module to extend out from the output electrode holes 113; a connecting pillar 120 disposed on the first surface 111 and extending in a first direction (Z), wherein the connecting pillar 120 includes a connecting though-hole 121 passing through the connecting pillar 120 along the first direction (Z); and a vent hole 114 disposed on the body portion 110 for mounting a vent plate of the battery module.

In the embodiment of the present disclosure, the output electrode holes 113 may be disposed on the end plate 100, which enables the output electrodes of the battery module to extend out from the output electrode holes 113. The connecting pillars 120 may be disposed on the first surface 111 of the end plate 100, and each connecting pillar 120 may be provided with a connecting though-hole 121, such that a plurality of battery modules may connect to each other through the connecting though-holes 121 of the connecting pillars 120 along the extending direction of the connecting pillars 120. Since the connecting pillars 120 may be disposed on the surface of the end plate 100 instead of being disposed on the body portion 110 of the end plate 100, the requirement regarding to the thickness of the end plate 100 is reduced, and the body portion 110 of the end plate 100 may be thinner, such that the weight of the battery module may be reduced, and the energy density of the battery module may be increased. The vent hole 114 may be disposed on the body portion so as to mount the vent plate of the battery module. The end plate 100 of the embodiment of the present disclosure has diversified functions, lighter weight, and simple structure.

The manufacturing material of the end plate 100 is not limited herein, and in order to ensure the strength of the end plate 100, the end plate 100 may be made of an aluminum plate, a steel plate, an iron plate, and other materials.

The output electrode holes 113 may be disposed in many ways. In an alternative embodiment, the number of the output electrode holes 113 may be two, and the two output electrode holes 113 may be distributed at intervals on the body portion 110 along the second direction (Y), wherein the second direction (Y) and the first direction (Z) may be perpendicular to each other. In these alternative embodiments, the two output electrode holes 113 allow the positive and negative output electrodes of the battery module to extend out, and the two output electrode holes 113 may be distributed at intervals on the body portion 110 along the second direction (Y), such that the influence to the strength of the end plate 100 caused by the output electrode holes 113 may be reduced as much as possible to ensure that the end plate 100 has sufficient strength.

In some alternative embodiments, the end plate 100 may further include at least two mounting holes 115 for mounting a deformable plate of the battery module. In these alternative embodiments, the end plate 100 may further be provided with the mounting holes 115, and the deformable plate of the battery module may be fixed in the mounting holes 115 by means of welding or the like. The function of the end plate 100 may be further enriched so as to reduce the number of components in the battery module and simplify the structure of the battery module.

In some alternative embodiments, the number of the mounting holes 115 may be two. The two mounting holes may be distributed at intervals along the second direction (Y), and the two mounting holes 115 and the two output electrode holes 113 may be disposed side by side at intervals along the first direction (Z). The number of the vent hole 114 may be one, and the vent hole 114 may be disposed between the two output electrode holes 113. In these alternative embodiments, the mounting holes 115 and the output electrode holes 113 may be disposed side by side along the first direction (Z), and in the battery module, the aperture of the mounting holes 115 of the deformable plate may be generally larger than the aperture of the output electrode holes 113. Therefore, the vent hole 114 may be disposed between the output electrode holes 113, such that the influence to the strength of the end plate 100 caused by the openings on the end plate 100 may be reduced.

In some alternative embodiments, the end plate may be further provided with a plurality of positioning concave portions 130, wherein the positioning concave portion 130 may be formed by the second surface being concaved toward the first surface, and at least one of the mounting holes 115 and the vent hole 114 may be disposed on the positioning concave portion 130. In these alternative embodiments, the end plate 100 may be provided with the positioning concave portions 130 so as to facilitate the positioning of the vent plate and the deformable plate on the end plate 100, such that the vent plate or the deformable plate may be fixed to the vent hole 114 or the mounting holes 115.

The end plate 100 further includes a convex portion 140 formed by the body portion 110 protruding in a direction from the second surface 112 to the first surface 111, wherein the output electrode holes 113 and the vent hole 114 may be disposed on the convex portion 140. With the convex portion 140 being disposed, the strength of the end plate 100 may be improved, and the positioning of the output electrode holes 113 and the vent hole 114 may be facilitated, and the forming of the end plate 100 may also be facilitated. Further, the positioning concave portions 130 may also be disposed on the convex portion 140, such that the positioning of the positioning concave portions 130 may be facilitated, and the forming of the end plate 100 may also be facilitated.

The number of the connecting pillars 120 is two, and the two connecting pillars 120 are distributed on both sides of the convex portion 140 along the second direction (Y). Accordingly, the two connecting pillars 120 are disposed on both sides of the convex portion 140, such that the strength of the end plate may be improved.

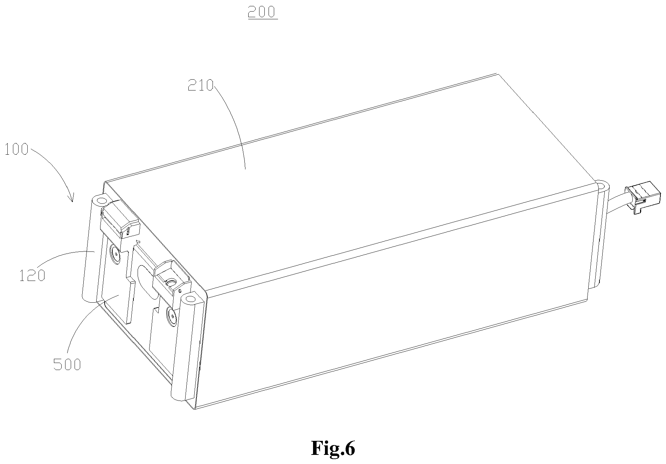

Referring to Fig. 6 to Fig. 7, a second embodiment of the present disclosure provides a housing 200 for a battery module, the housing 200 may include: a barrel-shaped housing body 210 extending in a third direction (X), wherein the housing body 210 has a containing chamber 211 and two openings 212 connected with the containing chamber 211 and disposed opposite to each other along the third direction (X); the end plate 100 described in any of the above embodiments, wherein each of the openings 212 may be provided with the end plate 100, and the second surface 112 of the end plate 100 may be disposed close to the housing body 210; wherein the third direction (X) and the first direction (Z) may be perpendicular to each other.

In an embodiment of the present disclosure, the housing 200 for the battery module may include a housing body 210 and at least two end plates 100. The housing body 210 may be in a barrel shape, which facilitates the assembly of the battery module. The housing 200 may also include the end plate 100 described in any of the above embodiments, and therefore may have the advantageous effects of any of the above embodiments, which will not be described herein again.

In some alternative embodiments, the length of the housing body 210 in the third direction (X) is greater than the width of the housing body 210 in the second direction (Y), and the width of the housing body 210 is greater than the height of the housing body 210 in the first direction (Z). In these alternative embodiments, the height of the housing 200 in the first direction (Z) is small. When the battery module is applied to a lithium-ion battery, especially a lithium-ion battery for a new energy vehicle, the space in the height direction may be very limited, and the space in the length and width directions may have some margin. Therefore, the embodiments of the present disclosure may fit the above requirements, and improve the energy density of the battery module.

A third embodiment of the present disclosure provides a battery module, including: the housing 200 described in any of the above embodiments; and a plurality of batteries 300 disposed side by side in the containing chamber 211 along the second direction (Y). In the present disclosure, the battery module may include the housing 200 described in any of the above embodiments, and therefore may have the advantageous effects of the housing 200 described in any of the above embodiments, which will not be described herein again.

In some alternative embodiments, the battery 300 includes output terminals 310 disposed on at least one end of the two ends of the battery 300 along the third direction (X). In these alternative embodiments, since the output terminals 310 of the battery 300 may be disposed on at least one end of the two ends of the battery 300 along the third direction (X), the output terminals 310 may not occupy the height in the first direction (Z) and may not affect the strength of the battery 300 in the first direction (Z).

In some alternative embodiments, the battery module may also include a vent plate (not shown) disposed in the vent hole 114 of the end plate 100. The battery module may further include a deformable plate (not shown) disposed in the mounting hole 115 of the end plate 100.

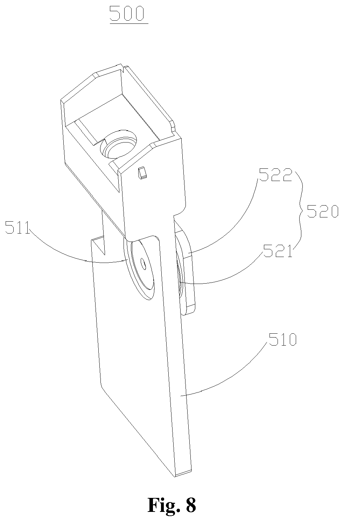

Referring to Fig. 8, in some alternative embodiments, the battery module may further include an output component 500 including a connecting component 510 and an output pole 520, wherein the connecting component 510 may be provided with a connecting hole 511, and the output pole 520 may have a connecting portion 521 and a stop portion 522 along its extending direction, wherein the diameter of the connecting portion 521 matches with the output electrode hole 113 and the connecting hole 511 such that the output pole 520 may be able to pass through the output electrode hole 113 and nest in the connecting hole 511, and the diameter of the stop portion 522 may be greater than or equal to the diameter of the connecting portion 521 such that the connecting component 510 may be fixed to the end plate 100 through the output pole 520. In these alternative embodiments, the electrical connection between the battery module and external devices may be implemented via the connecting component 510, and the connecting component 510 may be fixed to the end plate 100 through the output pole 520. It should be understood that the diameter of the stop portion 522 may not be limited herein, and the diameter of the preferred stop portion 522 may be greater than the diameter of the connecting portion 521 such that the connecting component 510 may be fixed to the end plate 100 via the stop function of the stop portion 522.

In some alternative embodiments, the battery module may further include an insulating separator 400 disposed between the batteries 300 and the end plate 100.

The present disclosure may be implemented in other specific forms without departing from the spirit and essential characteristics thereof. For example, the algorithms described in the specific embodiments may be modified without departing from the basic spirit of the present disclosure. Therefore, the embodiments may be considered in all respects as illustrative and not restrictive, the scope of the present disclosure should be defined by the appended claims, rather than the foregoing description. All changes that fall into the meaning and equivalents of the claims should be contained within the scope of the present disclosure.

## Claims

1. An end plate (100) for a housing (200) of a battery module, comprising:
a plate-shaped body portion (110) that has a first surface (111) and a second surface (112) disposed opposite to each other, wherein output electrode holes (113) are disposed on the body portion (110) to enable output electrodes of the battery module to extend out from the output electrode holes (113); and
a vent hole (114) disposed on the body portion (110) for mounting a vent plate of the battery module; **characterized by**:
a connecting pillar (120) disposed on the first surface (111) and extending in a first direction (Z), wherein the connecting pillar (120) comprises a connecting though-hole (121) passing through the connecting pillar (120) along the first direction (Z); and
a convex portion (140) formed by the body portion (110) protruding in a direction from the second surface (112) to the first surface (111), wherein the output electrode holes (113) and the vent hole (114) are disposed on the convex portion (140),
wherein the number of the connecting pillars (120) is two, and further wherein one of the two pillars is distributed on a first side of the convex portion (140), in the second direction (Y), and the other of the two pillars is distributed on a second side of the convex portion (140), in the second direction, whereby the directions (Y) and (Z) are perpendicular to each other.

2. The end plate (100) according to claim 1, wherein the number of the output electrode holes (113) is two, the two output electrode holes (113) are distributed at intervals on the body portion (110) along a second direction (Y), wherein the second direction (Y) and the first direction (Z) are perpendicular to each other, and the vent hole (114) is disposed between the two output electrode holes (113).

3. The end plate (100) according to claim 2, further comprising at least two mounting holes (115) disposed on the body portion (110) for mounting a deformable plate of the battery module, wherein the at least two mounting holes (115) are distributed at intervals along the second direction (Y), and the at least two mounting holes (115) and the two output electrode holes (113) are disposed side by side at intervals along the first direction (Z).

4. The end plate (100) according to claim 3, further comprising a plurality of positioning concave portions (130), wherein the positioning concave portions (130) are formed by the second surface (112) being concaved toward the first surface (111), and the mounting holes (115) and the vent hole (114) are disposed on the positioning concave portion (130).

5. A housing (200) for a battery module, comprising:
a barrel-shaped housing body (210) extending in a third direction (X), wherein the housing body (210) has a containing chamber (211) and two openings (212) connected with the containing chamber (211) and disposed opposite to each other along the third direction (X);
the end plate (100) according to any one of claims 1 to 4, wherein each of the openings (212) is provided with the end plate (100), and the second surface (112) of the end plate (100) is disposed close to the housing body (210);
wherein the third direction (X) and the first direction (Z) are perpendicular to each other.

6. A battery module, comprising:
the housing (200) according to claim 5;
a plurality of batteries (300) disposed side by side in the containing chamber (211) along the second direction (Y).

7. The battery module according to claim 6, wherein the battery (300) comprises output terminals (310) disposed on at least one end of the two ends of the battery (300) along the third direction (X).

8. The battery module according to claim 6, further comprising:
an output component (500) comprising a connecting component (510) and an output pole (520), wherein the connecting component (510) is provided with a connecting hole (511), and the output pole (520) has a connecting portion (521) and a stop portion (522) along its extending direction, wherein the diameter of the connecting portion (521) matches with the aperture of the output electrode hole (114) and the connecting hole (511) such that the connecting portion (521) is able to pass through the output electrode hole (114) and nest in the connecting hole (511), and the diameter of the stop portion (522) is greater than or equal to the diameter of the connecting portion (521) such that the connecting component (510) is able to be fixed to the end plate (100) through the output pole (520).

## Patentansprüche

1. Endplatte (100) für ein Gehäuse (200) eines Batteriemoduls, umfassend:
einen plattenförmigen Körperabschnitt (110), der eine erste Oberfläche (111) und eine zweite Oberfläche (112) aufweist, die einander gegenüberliegend angeordnet sind, wobei Ausgangselektrodenlöcher (113) auf dem Körperabschnitt (110) angeordnet sind, um Ausgangselektroden zu ermöglichen des Batteriemoduls, um aus den Ausgangselektrodenlöchern (113) herauszuragen;
eine Entlüftungsöffnung (114), die an dem Körperabschnitt (110) zum Anbringen einer Entlüftungsplatte des Batteriemoduls angeordnet ist; **gekennzeichnet durch**:
eine Verbindungssäule (120), die auf der ersten Oberfläche (111) angeordnet ist und sich in einer ersten Richtung (Z) erstreckt, wobei die Verbindungssäule (120) ein durch die Verbindungssäule (120) entlang der ersten Richtung (Z) verlaufendes Verbindungsdurchgangsloch (121) umfasst; und
einen konvexen Abschnitt (140), der durch den Körperabschnitt (110) gebildet ist, der in einer Richtung von der zweiten Oberfläche (112) zur ersten Oberfläche (111) vorsteht, wobei die Ausgangselektrodenlöcher (113) und das Entlüftungsloch (114) auf dem konvexen Abschnitt (140) angeordnet sind,
wobei die Anzahl der Verbindungssäulen (120) zwei ist und ferner wobei eine Verbindungssäule der zwei Verbindungssäulen (120) auf einer ersten Seite des konvexen Abschnitts (140) in der zweiten Richtung (Y) verteilt ist, und die andere Verbindungssäule der zwei Verbindungssäulen (120) auf einer zweiten Seite des konvexen Abschnitts (140) in der zweiten Richtung verteilt ist, wobei die Richtungen (Y) und (Z) senkrecht zueinander sind.

2. Endplatte (100) nach Anspruch 1, wobei die Anzahl der Ausgangselektrodenlöcher (113) zwei ist, die zwei Ausgangselektrodenlöcher (113) in Intervallen auf dem Körperabschnitt (110) entlang einer zweiten Richtung (Y) verteilt sind, wobei die zweite Richtung (Y) und die erste Richtung (Z) senkrecht zueinander sind und das Entlüftungsloch (114) zwischen den beiden Ausgangselektrodenlöchern (113) angeordnet ist.

3. Endplatte (100) nach Anspruch 2, ferner umfassend mindestens zwei Befestigungslöcher (115), die an dem Körperabschnitt (110) zum Anbringen einer verformbaren Platte des Batteriemoduls angeordnet sind, wobei die mindestens zwei Befestigungslöcher (115) in Intervallen entlang der zweiten Richtung (Y) verteilt sind, und die mindestens zwei Befestigungslöcher (115) und die zwei Ausgangselektrodenlöcher (113) in Intervallen entlang der ersten Richtung (Z) nebeneinander angeordnet sind.

4. Endplatte (100) nach Anspruch 3, ferner umfassend mehrere Positionierungskonkavabschnitte (130), wobei die Positionierungskonkavabschnitte (130) dadurch gebildet sind, dass die zweite Oberfläche (112) zur ersten Oberfläche (111) konkav ist und die Befestigungslöcher (115) und das Entlüftungsloch (114) auf dem Positionierungskonkavabschnitt (130) angeordnet sind.

5. Gehäuse (200) für ein Batteriemodul, umfassend:
einen tonnenförmigen Gehäusekörper (210), der sich in einer dritten Richtung (X) erstreckt, wobei der Gehäusekörper (210) eine Aufnahmekammer (211) und zwei mit der Aufnahmekammer (211) verbundenen und entlang der dritten Richtung (X) einander gegenüberliegend angeordneten Öffnungen (212) aufweist;
Endplatte (100) nach einem der Ansprüche 1 bis 6, wobei jede der Öffnungen (212) mit der Endplatte (100) versehen ist und die zweite Oberfläche (112) der Endplatte (100) nahe am Gehäusekörper (210) angeordnet ist;
wobei die dritte Richtung (X) und die erste Richtung (Z) senkrecht zueinander sind.

6. Ein Batteriemodul, umfassend:
das Gehäuse (200) nach Anspruch 5;
mehrere Batterien (300), die entlang der zweiten Richtung (Y) nebeneinander in der Aufnahmekammer (211) angeordnet sind.

7. Batteriemodul nach Anspruch 6, wobei die Batterie (300) Ausgangsanschlüsse (310) umfasst, die an mindestens einem Ende der beiden Enden der Batterie (300) entlang der dritten Richtung (X) angeordnet sind.

8. Batteriemodul nach Anspruch 6, ferner umfassend:
eine Ausgangskomponente (500), die eine Verbindungskomponente (510) und einen Ausgangspol (520) aufweist, wobei die Verbindungskomponente (510) mit einem Verbindungsloch (511) versehen ist und der Ausgangspol (520) einen Verbindungsabschnitt (521) und einen Anschlagabschnitt (522) entlang seiner Ausdehnungsrichtung aufweist, wobei der Durchmesser des Verbindungsabschnitts (521) mit der Öffnung des Ausgangselektrodenlochs (114) und des Verbindungslochs (511) übereinstimmt, so dass der Verbindungsabschnitt (521) das Ausgangselektrodenloch (114) passieren und in das Verbindungsloch (511) nisten kann, und der Durchmesser des Anschlagabschnitts (522) größer oder gleich dem Durchmesser des Verbindungsabschnitts (521) ist, so dass die Verbindungskomponente (510) über den Ausgangspol (520) an der Endplatte (100) befestigt werden kann.

## Revendications

1. Plaque d'extrémité (100) pour un logement (200) d'un module de batteries, comprenant :
une partie de corps en forme de plaque (110) qui a une première surface (111) et une deuxième surface (112) disposées en regard l'une de l'autre, où des trous d'électrode de sortie (113) sont disposés sur la partie de corps (110) pour permettre aux électrodes de sortie du module de batteries de s'étendre à partir des trous d'électrode de sortie (113) ; et
un trou d'évent (114) disposé sur la partie de corps (110) pour monter une plaque d'évent du module de batteries ; **caractérisée par** :
un montant de liaison (120) disposé sur la première surface (111) et s'étendant dans une première direction (Z), où le montant de liaison (120) comprend un trou traversant de liaison (121) traversant le montant de liaison (120) le long de la première direction (Z) ; et
une partie convexe (140) formée par la partie de corps (110) faisant saillie dans une direction allant de la deuxième surface (112) vers la première surface (111), où les trous d'électrode de sortie (113) et le trou d'évent (114) sont disposés sur la partie convexe (140),
où le nombre de montants de liaison (120) est égal à deux, et où en outre l'un des deux montants est distribué sur un premier côté de la partie convexe (140), dans la deuxième direction (Y), et l'autre des deux montants est distribué sur un deuxième côté de la partie convexe (140), dans la deuxième direction, moyennant quoi les directions (Y) et (Z) sont perpendiculaires l'une à l'autre.

2. Plaque d'extrémité (100) selon la revendication 1, dans laquelle le nombre des trous d'électrode de sortie (113) est égal à deux, les deux trous d'électrode de sortie (113) sont distribués à certains intervalles sur la partie de corps (110) le long d'une deuxième direction (Y), où la deuxième direction (Y) et la première direction (Z) sont perpendiculaires l'une à l'autre, et le trou d'évent (114) est disposé entre les deux trous d'électrode de sortie (113) .

3. Plaque d'extrémité (100) selon la revendication 2, comprenant en outre au moins deux trous de montage (115) disposés sur la partie de corps (110) pour monter une plaque déformable du module de batteries, où les au moins deux trous de montage (115) sont distribués à certains intervalles le long de la deuxième direction (Y), et les au moins deux trous de montage (115) et les deux trous d'électrode de sortie (113) sont disposés côte à côte à certains intervalles le long de la première direction (Z) .

4. Plaque d'extrémité (100) selon la revendication 3, comprenant en outre une pluralité de parties concaves de positionnement (130), où les parties concaves de positionnement (130) sont formées par la deuxième surface (112) qui est concave vers la première surface (111), et les trous de montage (115) et le trou d'évent (114) sont disposés sur la partie concave de positionnement (130).

5. Logement (200) pour module de batteries, comprenant :
un corps de logement en forme de tonneau (210) s'étendant dans une troisième direction (X), où le corps de logement (210) a une chambre de confinement (211) et deux ouvertures (212) reliées à la chambre de confinement (211) et disposées en regard l'une de l'autre le long de la troisième direction (X) ;
la plaque d'extrémité (100) selon l'une quelconque des revendications 1 à 4, où chacune des ouvertures (212) est pourvue de la plaque d'extrémité (100), et la deuxième surface (112) de la plaque d'extrémité (100) est disposée à proximité du corps de logement (210) ;
où la troisième direction (X) et la première direction (Z) sont perpendiculaires l'une à l'autre.

6. Module de batteries, comprenant :
le logement (200) selon la revendication 5 ;
une pluralité de batteries (300) disposées côte à côte dans la chambre de confinement (211) le long de la deuxième direction (Y).

7. Module de batteries selon la revendication 6, dans lequel la batterie (300) comprend des bornes de sortie (310) disposées sur au moins une extrémité des deux extrémités de la batterie (300) le long de la troisième direction (X).

8. Module de batteries selon la revendication 6, comprenant en outre :
un composant de sortie (500) comprenant un composant de liaison (510) et un pôle de sortie (520), où le composant de liaison (510) est pourvu d'un trou de liaison (511), et le pôle de sortie (520) a une partie de liaison (521) et une partie d'arrêt (522) le long de sa direction d'extension, où le diamètre de la partie de liaison (521) correspond à l'orifice du trou d'électrode de sortie (114) et du trou de liaison (511) de sorte que la partie de liaison (521) soit capable de traverser le trou d'électrode de sortie (114) et de s'emboîter dans le trou de liaison (511), et le diamètre de la partie d'arrêt (522) est supérieur ou égal au diamètre de la partie de liaison (521) de sorte que le composant de liaison (510) soit capable d'être fixé à la plaque d'extrémité (100) à travers le pôle de sortie (520).
